# DEMANDE DE BREVET EUROPEEN

(11) **EP 0 894 577 A1**
(43) Date de publication de la demande: **03.02.1999**
(21) Numéro de dépôt: 98112984.4
(22) Date de dépôt: 13.07.1998
(51) Int. Cl.: B25B 27/06

(54) **Outil d'extraction d'un roulement, notamment pour roue de patin à roues en ligne**

(30) Priorité: 01.08.1997 FR 9710180
(71) Demandeur: Salomon S.A., 74370 Metz-Tessy (FR)
(72) Inventeur: De Marchi, Jean-Louis, 74410 Saint-Jorioz (FR)

(57) **Abrégé**

La présente invention concerne un outil destiné à l'extraction d'un roulement d'une roue (1), notamment de patin du type à roues en lignes, la roue comprenant une cage concentrique (3, 4), destinée au logement d'au moins un roulement (5, 6) ayant une face frontale externe ; le roulement comportant une bague externe (5a, 6a), et une bague interne (5b, 6b) de diamètre (D3), espacées l'une de l'autre par des organes de roulement tels que des billes sphériques (7) ; l'outil comprenant un organe de préhension manuel ou manche (11) ayant une extrémité (11a) se prolongeant par un embout d'extraction (12) ayant une portion en forme de tronc de cône (14) comportant une grande base (B) de diamètre (D1) du côté de l'extrémité (11a) de l'organe de préhension (11) et une petite base (b), libre, qui est prolongée radialement par une partie annulaire coaxiale (13), en forme de collerette, de diamètre (D2), les diamètres (D1, D2) de la grande base (B) du tronc de cône (14) et de la collerette (13) en saillie radiale, étant au moins inférieurs à celui (D3) de la bague interne (5b, 6b) du roulement (5 ou 6), caractérisé en ce que, l'extrémité (11a) du manche comprend au moins une surface de butée (B1, B2), formant un épaulement supérieur au diamètre (D3) de la bague interne (5b, 6b) ; ladite extrémité étant destinée à prendre appui contre la face frontale externe du roulement ; ladite surface de butée étant espacée de la collerette d'une distance H correspondant au positionnement de la collerette au-delà du plan arrière (5ba, 6ba) de la bague interne (5b, 6b), pour la crocheter par basculement exercé sur le manche (11), d'où sur l'embout d'extraction (12).

## Description

La présente invention concerne un outil destiné à l'extraction d'un roulement d'une roue, notamment de patin à roulettes ou à roues en ligne. L'invention concerne aussi la méthode d'extraction d'un roulement adapté à l'utilisation d'un tel outil.

Que ce soit dans ce domaine particulier cité à titre d'exemple ou dans tout autre domaine, ce type de roue est généralement constitué par une enveloppe élastique formant un bandage de roulement, au centre de laquelle est ménagée une cage concentrique destinée au logement d'au moins un roulement.

Ce roulement est traditionnellement constitué par une bague externe, solidaire de l'enveloppe élastique formant le bandage de roulement, et par une bague interne, solidaire d'un axe transversal traversant, en l'occurrence, un châssis du patin à roues en ligne.

La cage destinée au roulement est ménagée, soit directement au centre de l'enveloppe élastique, soit dans une jante rapportée dans cette enveloppe.

En présence de deux roulements disposés de part et d'autre des faces latérales de la roue, il est connu d'espacer lesdits roulements par une entretoise disposée coaxialement à l'intérieur de ladite roue.

Il est évident que la pratique de ce type de sport met à dure épreuve les parties constitutives des roues et notamment des roulements.

En effet, la pratique du patin à roues en ligne comprend notamment une phase motrice ou propulsive où l'on fait diverger le patin vers l'extérieur en prenant appui sur les roues, ce qui induit des forces parfois contradictoires au niveau du roulement.

Selon cette même technique de patinage sur roues en ligne, le freinage s'effectuant par traînées latérales des roues inclinées, ou inversement par opposition, entraîne le même genre d'effort.

On peut encore citer toujours dans ce sport des nouvelles disciplines telles que le patinage acrobatique ou encore le patinage dit "agressive" provoquant nécessairement une usure rapide des roulements, étant donné parfois la violence des figures exécutées. Par ailleurs, les roues elles-mêmes s'usent très rapidement.

De manière à éviter le changement systématique des roues quand un roulement est endommagé, ou inversement, il a déjà été proposé de ne remplacer que le roulement sur le bandage de roulement défectueux en conservant la même enveloppe élastique ou le même roulement, et cela grâce à un extracteur de roulement à billes, approprié ayant pour but de faciliter l'opération.

C'est ainsi qu'il est connu un extracteur dit "à chocs" dont l'objectif est de faciliter l'extraction des roulements de leurs cages.

Cet extracteur connu est composé d'un axe cylindrique conçu pour pénétrer exactement dans une entretoise séparant les deux roulements et comportant un léger épaulement conçu pour venir en appui sur la face de ladite entretoise, de manière à la pousser et à pousser en conséquence le roulement situé à son autre extrémité, en donnant de légers chocs grâce à une pièce coulissante formant un marteau. Le roulement opposé est donc chassé grâce aux chocs répétés et uniformément répartis sur la face opposée de l'entretoise. Le dégagement du premier roulement s'effectue en opérant de manière inverse, c'est-à-dire en disposant l'outil de l'autre côté de l'entretoise et en tapant de la même manière avec le marteau coulissant.

Un tel extracteur présente sans doute bon nombre d'avantages mais il est à remarquer qu'il présente également des inconvénients, à savoir la nécessité de se trouver devant une roue disposant d'une entretoise entre ces deux roulements, ce qui n'est pas toujours le cas. De plus, l'outil est d'une conception relativement complexe car mettant en oeuvre deux pièces constitutives mobiles l'une par rapport à l'autre, à savoir l'axe épaulé et le marteau coulissant. Un autre inconvénient réside également dans le fait que ce type d'outil n'est pas adaptable à des diamètres d'entretoises différents, mais bien à un seul diamètre et qu'un autre outil est nécessaire pour un autre diamètre.

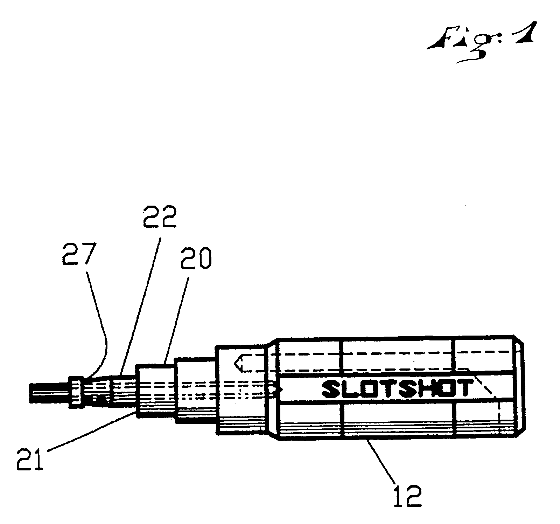

Le brevet US 5,524,513 de Barahona concerne un outil multi-usages pour une roue de patin en ligne comme le montre la figure 1 (les références des dessins du document d'origine ont été conservées pour éviter toute confusion. Certaines de ces références peuvent être communes avec certaines références se rapportant à la description de l'invention sans qu'il s'agisse du même moyeu désigné). L'outil comprend une partie de manche 12 qui se prolonge par une succession de formes concentriques de diamètres dégressifs en direction de l'extrémité d'introduction à la roue. Au voisinage de cette extrémité est prévu un niveau 22 de diamètre suffisamment petit pour permettre son introduction à l'intérieur de la roue. Le niveau 22 possède aussi un épaulement 21 qui est aussi de diamètre inférieur au diamètre de la bague interne du roulement mais qui s'engage avec un élément d'entretoisement du moyeu. L'opération de démontage s'opère ainsi ; l'outil est introduit jusqu'à mise en butée de l'épaulement sur l'élément d'entretoisement. La poussée est exercée sur l'élément d'entretoisement qui pousse le roulement opposé et l'oblige à sortir. Le second roulement est ensuite dégagé par le niveau 22 formé d'une partie en tronc de cône prolongée par un rebord 27 lequel est prévu pour s'engager dans le deuxième roulement afin de l'extraire par traction.

L'un des inconvénients de ce système provient du dégagement par poussée du premier roulement qui peut s'avérer délicat compte tenu du manque de surface d'appui et de préhension de la roue. En plus, l'élément d'entretoisement, généralement en plastique, peut être endommagé par l'opération car il est utilisé pour chasser le roulement et subit donc de la compression. Un autre inconvénient provient de ce que l'outil est conçu pour extraire le roulement par poussée seulement dans le cas du premier roulement et par poussée ou traction dans le cas du second roulement. Pour une extraction par traction, l'outil est mal adapté pour exécuter rapidement l'extraction du second roulement compte tenu de l'absence d'épaulement pouvant servir de face de référence et d'appui à l'introduction de la longueur appropriée de la partie d'extraction au travers du roulement. En effet, l'épaulement 21 est conçu pour passer au travers du roulement et n'est donc pas adapté à servir cette fonction d'appui et de référence d'introduction. L'épaulement suivant 20 du second niveau a un diamètre suffisant pour s'engager contre le roulement mais est, quant à lui, à une distance trop éloignée du rebord 27 d'accrochage du roulement compte tenu de la largeur (standard) d'un roulement. D'ailleurs, l'épaulement 20 est décrit comme ayant pour fonction unique de sortir le second roulement par poussée et non pas par traction. Ainsi, l'outil est donc d'une conception complexe et dont l'usage n'apparaît pas entièrement satisfaisant.

Le but de la présente invention est d'éviter les inconvénients précités en proposant un outil extracteur simple et efficace pouvant également s'adapter à différents diamètres d'entretoises, lorsqu'elles sont présentes dans la roue, mais également à pouvoir exercer son rôle d'extracteur, même en l'absence d'entretoise dans d'autres types de roues existant sur le marché.

Parmi l'un des objets de l'invention, l'outil permet d'extraire les deux roulements selon la même méthode assurant plus d'efficacité et de rapidité. Un autre objet est aussi de s'abstenir d'exercer des efforts sur l'entretoise lors du démontage afin de réduire le risque d'endommagement ou d'apparition de jeu lors du remontage.

L'invention concerne un outil destiné à l'extraction d'un roulement d'une roue, notamment de patin du type à roues en lignes, la roue comprenant une cage concentrique, destinée au logement d'au moins un roulement ayant une face frontale externe ; et comportant une bague externe, et une bague interne, espacées l'une de l'autre par des organes de roulement tels que des billes sphériques ; l'outil comprenant un organe de préhension manuel ou manche ayant une extrémité se prolongeant par un embout d'extraction ayant une portion en forme de tronc de cône comportant une grande base de diamètre du côté de l'extrémité de l'organe de préhension et une petite base, libre, qui est prolongée radialement par une partie annulaire coaxiale, en forme de collerette, les diamètres de la grande base du tronc de cône et de la collerette en saillie radiale, étant au moins inférieurs à celui de la bague interne du roulement caractérisé en ce que, l'extrémité du manche comprend au moins une surface de butée, formant un épaulement supérieur au diamètre de la bague interne ; ladite extrémité étant destinée à prendre appui contre la face frontale externe du roulement ; ladite surface de butée étant espacée du plan inférieur de la collerette d'une distance H correspondant au positionnement de la collerette au-delà du plan arrière de la bague interne, pour la crocheter par basculement exercé sur le manche, d'où sur l'embout d'extraction.

L'invention se rapporte aussi à une méthode d'extraction d'un roulement d'une roue, notamment d'une roue de patin à roues en ligne, au moyen d'un outil d'extraction comprenant un organe de préhension manuel ou manche ayant une extrémité se prolongeant par un embout d'extraction ayant une portion en forme de tronc de cône comportant une grande base du côté de l'extrémité de l'organe de préhension et une petite base libre prolongée par une collerette caractérisée en ce qu'elle comprend une opération d'engagement de l'embout d'extraction au travers du roulement jusqu'à mise en butée de l'extrémité sur la face frontale externe du roulement de manière à positionner la collerette au-delà du roulement ; puis, à exercer un mouvement de basculement sur l'organe de préhension de façon à crocheter le roulement au moyen de la collerette et à exercer, dans cette position basculée une force de traction de manière à extraire le roulement de la roue.

La présente invention concerne également les caractéristiques qui ressortiront au cours de la description qui va suivre et qui devront être considérées isolément ou selon toutes leurs combinaisons techniques possibles.

Cette description, donnée à titre d'exemple non limitatif, fera mieux comprendre comment l'invention peut être réalisée, en référence aux dessins annexés sur lesquels :
- la figure 1 montre un outil selon l'art antérieur connu,
- la figure 2 montre un outil d'extraction selon l'invention, en cours d'engagement dans la roue,
- la figure 3 est une vue d'un outil d'extraction selon la figure 1 en cours de crochetage du roulement de ladite roue,
- la figure 4 est une vue d'un outil de crochetage en cours d'extraction du roulement de la roue,
- la figure 5 est une vue du même outil d'extraction opérant sur une roue équipée d'une entretoise pour un diamètre d'axe inférieur,
- la figure 6 est, à échelle agrandie, une vue de détail de l'extrémité de l'outil d'extraction des figures 1 à 4,
- la figure 7 est une vue de détail, à échelle agrandie, montrant l'outil d'extraction selon l'une des figures 1 à 5 en cours d'introduction dans une portion de roue munie des roulements à extraire,
- la figure 8 est une vue similaire à la figure 6 montrant l'extrémité dudit outil en cours d'extraction du roulement de ladite roue.

La roue 1, globalement désignée sur les figures, est de manière connue constituée par une enveloppe élastique 2 formant un bandage de roulement et au centre de laquelle est ménagée une cage concentrique 3, 4, destinée au logement de roulements correspondants 5, 6.

Chacun de ces roulements comporte une bague externe 5a, 6a, solidaire de l'enveloppe 2, et une bague interne 5b, 6b, solidaire d'un axe transversal (non représenté) destiné au montage rotatif de la roue. Lesdites bagues externe 5a, 6a, et interne 5b, 6b, sont espacées l'une de l'autre par des billes sphériques, ou autres organes de roulements, matérialisées par le repère 7.

Selon l'invention, l'outil 10 globalement désigné, destiné à l'extraction des roulements à billes 5 ou 6, est constitué par un organe de préhension manuel ou manche 11 à une extrémité 11a duquel est ménagé un embout d'extraction 12 de conformation tronconique, c'est-à-dire en forme d'un tronc de cône, dont la grande base B est issue de l'extrémité 11a de l'organe de préhension 11 et dont la petite base b, libre, est surmontée d'une partie annulaire coaxiale 13 s'étendant radialement en forme de collerette. Les diamètres D1, D2, de la grande base B du tronc de cône 14 et de la collerette 13 la surmontant, sont légèrement inférieurs à celui D3 de la bague interne 5b, 6b, du roulement 5 ou 6.

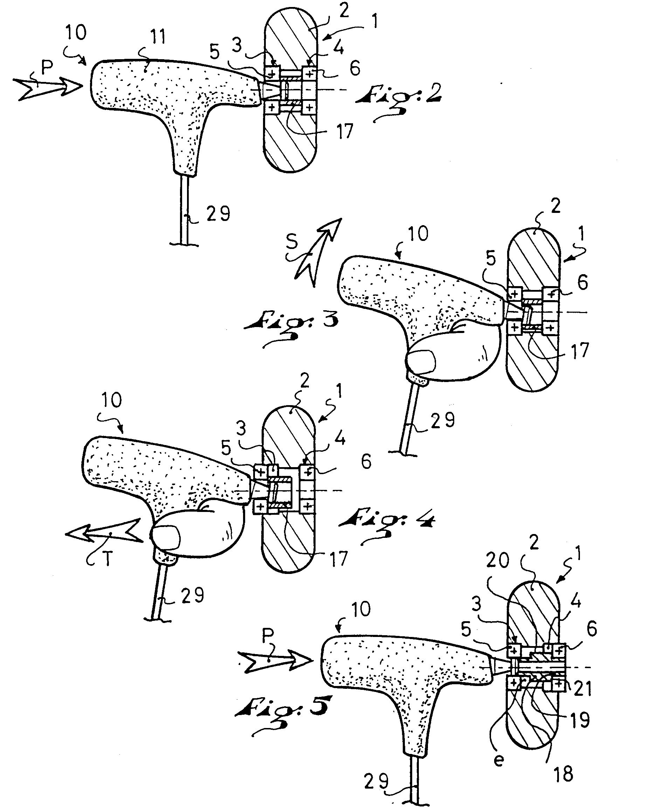

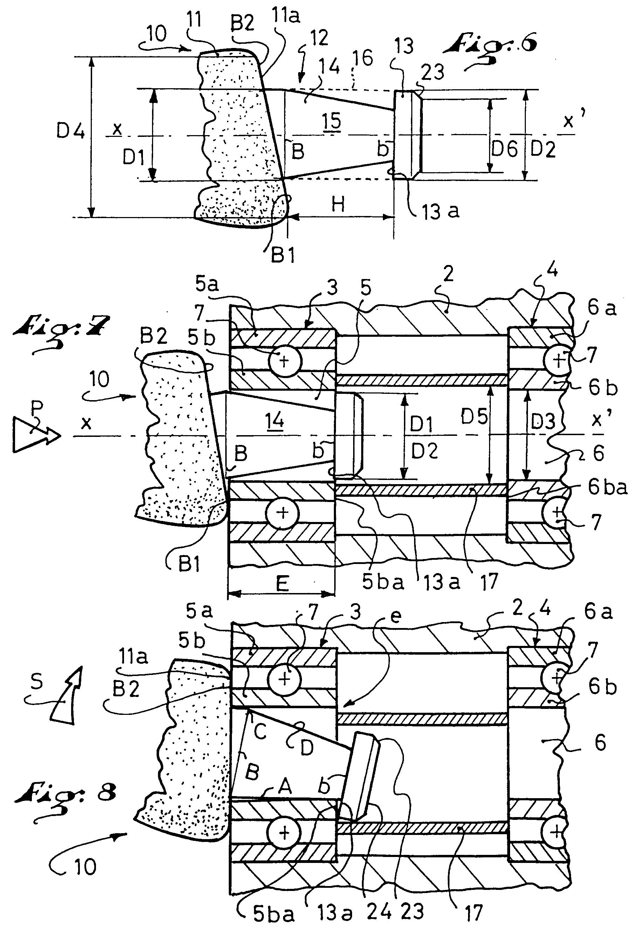

La distance H comprise entre l'extrémité 11a du manchon 11 et le plan inférieur 13a de la collerette 13 est au moins supérieure à l'épaisseur E, en direction axiale, de ladite bague 5b, 6b, de manière à permettre l'introduction, selon une poussée P (cf. figures 1 et 6), de l'embout d'extraction 12 ainsi formé dans cette dernière, jusqu'à ce que ledit plan inférieur 13a de la collerette 13 vienne au niveau du plan arrière 5ba, 6ba, de la bague interne 5b, pour la crocheter suite à un basculement, selon la direction S, exercé sur le manche 11, d'où sur l'embout d'extraction 12 (cf. figures 3 et 8).

Ainsi et comme le montrent particulièrement bien les figures 3, 4 et 8, lors du basculement de l'embout d'extraction 12 en vue de crocheter et d'extraire le roulement 5 par exemple, l'une des génératrices A du tronc de cône 14 prend appui sur une génératrice interne correspondante de la bague interne 5a, alors qu'un point C d'une génératrice D, diamétralement opposée du même tronc de cône 14, fait simultanément levier sur une génératrice, diamétralement opposée à la génératrice de ladite bague interne 5a. Il suffit ensuite d'exercer un effort de traction T, en direction axiale du roulement, pour que la collerette 13 "s'accroche" derrière le plan arrière 5ba de la bague interne et entraîne celle-ci et donc l'ensemble du roulement vers l'extérieur.

Selon une caractéristique de l'invention, le diamètre D1 de la grande base B du tronc de cône 14 de l'embout d'extraction 12 et le diamètre extérieur D2 de la collerette 13 la surmontant sont identiques et sensiblement égaux, sous réserve d'un jeu nécessaire au glissement, au diamètre intérieur D3 de la bague interne 5b ou 6b du roulement 5 ou 6. Ainsi, pour un diamètre D3 de bague interne de roulement correspondant à un diamètre d'axe de 8 mm, les diamètres D1 et D2 seront égaux à 7,9 mm. De préférence, la collerette 13 est munie en bout d'un chanfrein périphérique 23 délimitant une face d'extrémité 24 de diamètre D6 et destinée à faciliter l'introduction de l'embout dans la bague interne du roulement.

Selon une autre caractéristique de l'invention, le tronc de cône 14 et sa collerette 13 constituant l'embout d'extraction 12 sont obtenus par enlèvement de matière d'une zone triangulaire de révolution 15, effectué sur une pièce initialement cylindrique 16, à une distance de son extrémité telle à permettre d'obtenir de matière et au cours d'une même opération, la collerette 13 et la partie tronconique 14 qu'elle surmonte.

A titre d'exemple non limitatif, la pente donnée au tronc de cône 14 de l'embout d'extraction 12 est comprise entre 5° et 10° et peut avoir une valeur d'angle de l'ordre de 7° par rapport à son axe de révolution xx'.

Selon un mode de réalisation préféré, montré particulièrement aux figures 5 à 7, la face d'extrémité 11a du manchon est inclinée du bas vers le haut, de l'avant vers l'arrière, par rapport à la grande base B du tronc de cône 14, en formant avec ladite base un angle de préférence équivalent à celui du tronc de cône 14, c'est-à-dire de l'ordre de 7°.

Cette construction permet de définir deux surfaces de butée B1, B2, la face de butée B1 située à une distance H de la face inférieure 13a de la collerette 1, définit la limite d'introduction de l'embout d'extraction 12, à l'intérieur du roulement 5, 6, à extraire, en venant buter contre celui-ci (cf. figure 7) et sert en même temps de point de "pivotement" pour le basculement dudit embout 12 à l'intérieur du roulement 5, 6, lors du mouvement de bascule S ultérieur. La distance H est de préférence comprise entre 7,1 et 10 mm, plus préférablement 7,1 à 7,5 mm, de façon à être légèrement supérieure à l'épaisseur E du roulement dont la valeur standard est de 7 mm pour les roues de patin en ligne.

La face de butée B2, diamétralement opposée à la face de butée B1, vient en appui contre le roulement 5, 6, à extraire, après ledit mouvement de bascule, et coopère avec la collerette 13a pour l'extraction dudit roulement comme montré sur les figures 3 et 7. Il est également possible d'effectuer le mouvement de bascule en sens opposé, auquel cas la face de butée B1 coopère avec la collerette 13a pour l'extraction du roulement.

Egalement, la distance H comprise entre l'extrémité 11a, ou la face de butée B1, du manche 11 et le plan inférieur 13a de la collerette 13 est sensiblement égale à l'épaisseur E de la bague interne 5b ou 6b du roulement 5 ou 6, au jeu nécessaire près, pour autoriser son basculement lors du crochetage.

Dans tous les cas, la surface d'extrémité 11a du manche 11, de laquelle est issu l'embout d'extraction 12, est d'un diamètre D4 supérieur à celui D1 de la grande base B du tronc de cône 14 et à celui B3 de la bague interne 5b ou 6b du roulement 5 ou 6, afin de constituer une butée contre le plan extérieur frontal de celle-ci 5b ou 6b.

Les figures 2, 3 et 4 illustrent l'extraction des roulements 5 et 6 d'une roue 1 à double roulement, situés de part et d'autre de celle-ci et entre lesquels est interposée une entretoise 17, le diamètre interne D5 de celle-ci 17 correspondant à celui D3 de la bague interne du roulement. Dans ce cas, les diamètres D1 et D2 correspondent aux diamètres D3 et D5, au jeu près, et le basculement de l'outil, après pénétration de la collerette au delà du premier roulement 5, provoque un déplacement vertical corrélatif de l'entretoise 17 jusqu'à la libération d'un espace e nécessaire au crochetage de la bague interne dudit roulement.

La figure 5 illustre l'extraction des roulements 5 et 6 pour une roue munie d'une entretoise 18 spécifique à une utilisation avec un axe de roue de diamètre 6 mm. Dans un tel cas, l'entretoise 18 comporte une partie 19 qui s'étend à l'intérieur des roulements 5 et 6 et présente un diamètre intérieur correspondant au diamètre D6 de la face d'extrémité 24 de la collerette 13 et une partie 20 forment entretoise proprement dite entre les roulements, et définissant avec les parties 19 deux épaulements radiaux 21.

Dans ce cas, l'outil d'extraction peut être utilisé directement en poussée axiale P pour extraire les roulements 5 et 6, cet effort de poussée étant transmis via le chanfrein 23 de la face d'extrémité 24 à la partie 19 de l'entretoise et via l'épaulement 21 de cette dernière à la bague interne du roulement 5, 6, permettant ainsi l'extraction par poussée de celui-ci.

Le même processus de crochetage décrit ci-avant peut ensuite être appliqué pour l'extraction de l'autre roulement 5, 6.

Selon une autre caractéristique de l'invention, l'embout d'extraction 12 se prolonge, par l'intermédiaire du manche 11, par une clé 29 apte à desserrer un élément de fixation de la roue 1 en vue de son démontage s'effectuant préalablement à l'extraction du roulement 5, 6, de celle-ci.

Enfin, la clé 29 et l'embout d'extraction 12 s'étendent dans des directions formant entre elles un angle sensiblement perpendiculaire à partir du manche 11, globalement en forme de T, de manière à le rendre ergonomiquement saisissable à la façon d'un pistolet.

Afin d'extraire un roulement 5 ou 6, il suffit donc d'engager l'embout d'extraction 12 dans la bague interne 5b du roulement 5 par exemple, jusqu'à venue en butée de la collerette 11 sur la face frontale externe dudit roulement. Ensuite, il suffit de faire basculer selon S le manche vers le haut ou vers le bas pour crocheter ladite bague interne 5b du roulement 5 (cf. figure 3).

Dans cette position, une traction T est exercée avec l'index sur la partie 29 (figure 4), ce qui permet de maintenir crocheté le roulement et de l'entraîner en translation jusqu'à son extraction.

## Revendications

1. Outil destiné à l'extraction d'un roulement d'une roue (1), notamment de patin du type à roues en lignes, la roue comprenant une cage concentrique (3, 4), destinée au logement d'au moins un roulement (5, 6) ayant une face frontale externe ; le roulement comportant une bague externe (5a, 6a), et une bague interne (5b, 6b) de diamètre (D3), espacées l'une de l'autre par des organes de roulement tels que des billes sphériques (7) ; l'outil comprenant un organe de préhension manuel ou manche (11) ayant une extrémité (11a) se prolongeant par un embout d'extraction (12) ayant une portion en forme de tronc de cône (14) comportant une grande base (B) de diamètre (D1) du côté de l'extrémité (11a) de l'organe de préhension (11) et une petite base (b), libre, qui est prolongée radialement par une partie annulaire coaxiale (13), en forme de collerette, de diamètre (D2), les diamètres (D1, D2) de la grande base (B) du tronc de cône (14) et de la collerette (13) en saillie radiale, étant au moins inférieurs à celui (D3) de la bague interne (5b, 6b) du roulement (5 ou 6) caractérisé en ce que, l'extrémité (11a) du manche comprend au moins une surface de butée (B1, B2), formant un épaulement supérieur au diamètre (D3) de la bague interne (5b, 6b) ; ladite extrémité étant destinée à prendre appui contre la face frontale externe du roulement ; ladite surface de butée étant espacée de la collerette d'une distance H correspondant au positionnement de la collerette au-delà du plan arrière (5ba, 6ba) de la bague interne (5b, 6b), pour la crocheter par basculement exercé sur le manche (11), d'où sur l'embout d'extraction (12).

2. Outil selon la revendication 1, caractérisé en ce que le diamètre (D1) de la grande base (B) du tronc de cône (14) de l'embout d'extraction (12) et le diamètre extérieur (D2) de la collerette (13) la surmontant sont identiques et sensiblement égaux au diamètre intérieur (D3) de la bague interne (5b ou 6b) du roulement (5 ou 6).

3. Outil selon la revendication 2, caractérisé en ce que le tronc de cône (14) et sa collerette (13) constituant l'embout d'extraction (12) sont obtenus par enlèvement de matière d'une zone triangulaire de révolution (15), effectué sur une pièce initialement cylindrique (16).

4. Outil selon l'une des revendications 1, 2 ou 3, caractérisé en ce que la pente donnée au tronc de cône (14) de l'embout d'extraction (12) est comprise entre 5° et 10° par rapport à son axe de révolution (xx').

5. Outil selon la revendication 1, caractérisé en ce que la distance (H) comprise entre l'extrémité (11a) du manche (11) et le plan inférieur (13a) de la collerette (13) est sensiblement supérieure à l'épaisseur (E) de la bague interne (5b ou 6b) du roulement (5 ou 6).

6. Outil selon l'une des revendications 1 à 5, caractérisé en ce que la surface d'extrémité (11a) du manche (11), de laquelle est issu l'embout d'extraction (12), est d'un diamètre (D4) supérieur à celui (D1) de la grande base (B) du tronc de cône (14) et à celui (B3) de la bague interne (5b ou 6b) du roulement (5 ou 6), afin de constituer une butée contre le plan extérieur frontal de celle-ci (5b ou 6b).

7. Outil selon la revendication 6, caractérisé en ce que la surface d'extrémité (11a) du manche est inclinée par rapport à la grande base (B) du tronc de cône (14).

8. Outil selon l'une des revendications précédentes, caractérisé en ce que, s'agissant d'extraire les roulements (5 et 6) d'une roue (1) à double roulement, situés de part et d'autre de celle-ci et entre lesquels est interposée une entretoise (17), le diamètre interne (D5) de celle-ci (17) est sensiblement supérieur aux diamètres (D1 et D2) de l'embout d'extraction (12).

9. Outil selon l'une des revendications 1 à 8, caractérisé en ce que la collerette (13) est munie en bout d'un chanfrein périphérique (23).

10. Outil selon l'une des revendications 1 à 9, caractérisé en ce que l'embout d'extraction (12) se prolonge, par l'intermédiaire du manche (11), par une clé (19) apte à desserrer un élément de fixation de la roue (1) en vue de son démontage s'effectuant préalablement à l'extraction du roulement (5, 6) de celle-ci.

11. Outil selon la revendication 10, caractérisé en ce que la clé (19) et l'embout d'extraction (12) s'étendent dans des directions formant entre elles un angle sensiblement perpendiculaire à partir du manche (11), globalement en forme de T, de manière à le rendre ergonomiquement saisissable.

12. Méthode d'extraction d'un roulement d'une roue (1), notamment d'une roue de patin à roues en ligne, au moyen d'un outil d'extraction comprenant un organe de préhension manuel ou manche (11) ayant une extrémité (11a) se prolongeant par un embout d'extraction (12) ayant une portion en forme de tronc de cône (14) comportant une grande base (B) du côté de l'extrémité (11a) de l'organe de préhension (11) et une petite base (b) libre prolongée par une collerette (13), caractérisée en ce qu'elle comprend une opération d'engagement de l'embout d'extraction (12) au travers du roulement (5, 6) jusqu'à mise en butée de l'extrémité (11a) sur la face frontale externe du roulement de manière à positionner la collerette (13) au-delà du roulement (5, 6) ; puis, à exercer un mouvement de basculement sur l'organe de préhension de façon à crocheter le roulement au moyen de la collerette (13) et à exercer, dans cette position basculée une force de traction (T) de manière à extraire le roulement de la roue.
